# EUROPEAN PATENT APPLICATION

(11) **EP 2 824 628 A1**
(43) Date of publication of application: **14.01.2015**
(21) Application number: 13175965.6
(22) Date of filing: 10.07.2013
(51) Int. Cl.: G06Q 20/20, G06Q 20/32, G06Q 20/38, G06Q 20/40

(54) **Direct debit procedure**

(71) Applicant: Vodafone Holding GmbH, 40213 Düsseldorf (DE)
(72) Inventor: Strasding, Nikolai, 47809 Krefeld (DE); Ritzmann, Mark, 40477 Düsseldorf (DE)
(74) Representative: Jostarndt, Hans-Dieter

(57) **Abstract**

The invention describes a method of direct debiting a user by means of a mobile communication device (110) comprising a secure element (115). The method comprises the steps of:
- receiving at least a part of an identifier provided by means of a backend system (105) by means of the mobile communication device (110);
- storing the transmitted identifier in the secure element (115);
- initiating a data connection between the mobile communication device (110) and/or the secure element (115) and a reader device (120) for preparing a transaction;
- transferring at least a part of the transmitted identifier to the reader device (120);
- verifying the identifier to be transferred to the reader device (120) or transferred to the reader device (120) in order to release a payment by means of a bank system (130).

The invention further describes a mobile communication device and a system to perform the method in order to enable secure payment by means of a mobile communication device.

## Description

### Field of the invention:

The invention relates to a method for direct debiting a user. The invention further relates to a mobile communication device and a system being adapted to carry out the method.

### Background of the invention:

Current debit advice procedure use customers bank account information (account number and bank code) read from customer's bank cards, which are used to trigger a direct debit by the merchant to the customer's bank account. Usually Payment Services Providers (PSP) are supporting merchants on this. They provide the Point of Sale (PoS) terminals to the merchants and process the debit advice against the customers bank account. Sometimes they are offering scoring services on top, reducing risk for the merchant. Merchants are paying a service fee to the PSP for this, which is usually lower than any other cashless payment method. This debit advice procedure is now at risk due to European payment regulation. New methods of direct debiting are needed in order to fulfill the standards of the European payment regulation and at the same time enable the security and privacy of the user of such direct debit procedures.

### Summary of the invention:

It's thus an object of the present invention to provide an improved method of direct debiting, a mobile communication device being adapted to perform the method and a corresponding system for direct debiting.

According to a first aspect a method of direct debiting a user by means of a mobile communication device is provided. The mobile communication device comprises a secure element and the method comprises the steps of:
- receiving at least a part of an identifier provided by means of a backend system by means of the mobile communication device;
- storing the transmitted identifier in the secure element;
- initiating a data connection between the mobile communication device and/or the secure element and a reader device for preparing a transaction;
- transferring at least a part of the transmitted identifier to the reader device; and
- verifying the identifier to be transferred to the reader device or transferred to the reader device in order to release a payment by means of a bank system.

The identifier is generated by means of the backend system and may comprise the customer name and address in addition to the bank information as International Bank Account Number (IBAN) and Bank Identifier Code (BIC). The identifier or a part of the identifier is submitted from the backend system to the mobile communication device. The transmission may be performed by means of the backend system or an intermediate transmission service system. The transmission service system may enable an interface to a wireless network in order to communicate or exchange data with the mobile communication device. The identifier or the part of the identifier is received by means of the mobile communication device and securely stored in the secure element. The secure element may be, for example, a subscriber identity module (SIM) according to the GSM standard or a universal subscriber identity module (USIM) according to the UMTS standard. The secure element may alternatively be embedded in a device like a Near Field Communication (NFC) chip or on a micro SD card. The secure element may provide a secure environment for storing the identifier by encrypting the identifier and/or requesting authentication of a user by means of a Personal Identification Number (PIN), biometric identification or the like. The identifier can thus only be used by means of authorized people, facilities or devices.

A data connection may be initiated between the mobile communication device and a reader device in a PoS like a shop. The latter may be done by means of Near Field Communication (NFC), Bluetooth or any other suitable communication technology. The reader device may be a part of a billing system at the PoS or a separate device connected to such a billing system. The mobile communication device may prepare transaction data to be transferred to the reader device. The transaction data may comprise a part of the identifier received by the mobile communication device. Even in the case the mobile communication device did not receive the full identifier created by the backend system but only a part of the identifier only a smaller part of this received part of the identifier may be transferred to the reader device. The identifier or transaction data may be verified by means of the user prior to submission to the reader by means of an authentication using a PIN, biometric identification or the like.

Alternatively, the identifier or transaction data may be verified by means of the backend system by checking the identifier or transaction data. The identifier or transaction data may have to be submitted to the backend system in this case. The submission of such a request may be initiated by the reader device prior to requesting payment of the goods or services bought at the PoS.

For data security reasons it may preferred that the reader device or the billing system of the PoS submits the identifier directly to the bank system or to a PSP. The bank system or the PSP may request verification of the identifier or the transaction data by means of the backend system. Submitting the request by means of the bank system or the PSP avoids a broad distribution of the full identifier in case that only a part of the identifier is transferred to the reader device such that data security is enhanced. The check by means of the backend system may comprise decryption of an encrypted identifier or encrypted transaction data. Alternatively or in addition the identifier may be compared with the identifier generated by and stored in the backend system.

After verifying the identifier a release message may be transmitted to the bank system in order to release the payment for paying, for example, the goods or services purchased at the PoS. The release message may be submitted directly to the bank system or via a PSP. The release message may comprise the full identifier comprising the customer name and address in addition to IBAN and BIC. The release message and/or the identifier may be encrypted such that only the bank system is able to decrypt the identifier in order to enhance data security.

There is in principle no need to transfer an identifier comprising customer name and address in addition to the IBAN and BIC if verification is performed by means of the backend system. It would be sufficient that the identifier submitted to the mobile communication device by means of the backend system comprises a code without any direct relation to customer name and the like and store the code in the secure element. The backend system would verify the code and may submit the preferably encrypted identifier or a unique code identifying the user to the bank system in order to initiate the payment. It's thus possible to use an entirely anonymized identifier without any relation to the user, IBAN, BIC and the like. That would also allow maintenance of the data only in the backend system such that data security may be enhanced.

In case that only a part of the identifier is transferred to the mobile communication device and stored in the secure element of the mobile communication device the verification by means of the backend system may comprise a comparison of the part of the identifier sent from the backend system to the mobile communication system and the part of the identifier received by the backend system via the reader device, PSP or bank system.

The request of verification submitted by the reader device, PSP or bank system may comprise first information about the transaction. The first information about the transaction may comprise the time and location of the transaction, the goods or services bought at the PoS, the price and the like. The first information may be part of the transaction data comprising the identifier or the part of the identifier transferred by the mobile communication device.

An application stored and executed in the secure element may for example request such data as position and time from a main processor of the mobile communication device. The application may add all of the requested data or only a part of the requested data as first information to the transaction data. Further data which may be stored in the secure element may be added to the transaction data by means of the application as first information. The first information may be added by means of the application in accordance with the specific mobile communication device and/or in accordance with an agreement with the backend system. The kind of mobile communication device may thus determine the first information and in case that a different mobile communication device is used in combination with the secure element a new coordination between mobile communication device and backend system may be necessary.

Furthermore, the first information added to the transaction data may depend on the time of transaction such that the first information is added in accordance with a schedule coordinated with the backend system in order to enhance the security of the transaction.

In an alternative approach the first information may be added to the transaction data by means of the reader device, PSP or the bank system. The first information may comprise information regarding time, location, amount of money to be paid, goods and services and the like. In principle all information which may be relevant regarding the transaction and which may be available by means of the reader device, PSP or the bank system may be added as first information.

In addition second information about the transaction may be submitted by means of the mobile communication device to the backend system. The first and the second information about the transaction may be compared by means of the backend system. The backend system may be able to check the transaction by means of the comparison of the first and second information. The backend system may not verify the request to release the transaction in case of inconsistencies. The transaction may be stopped if, for example, too much time elapsed between receiving the first and second data, if the transaction time or location submitted with first and second information dose not coincide within certain limits. The transactions to be paid by means of the identifier may be limited to certain locations and/or goods and services stored in the backend system. The location may, for example, be limited to a certain area around residence of the user and may be adapted only by means of a request by the user and/or an authentication procedure initiated by the backend system. Furthermore, a maximum amount of money may be defined which can be paid by means of the mobile communication device within a defined time period.

The request may comprise an one-time authentication information. The application running on the secure element may generate codes or pieces of information in accordance with a schedule coordinated with the backend system. The one time authentication information may be first information transferred to the backend system at a defined time. Furthermore, the application may transfer changing parts of the identifier to the reader device. The parts of the identifier transferred to the reader device may be changed after each transaction. The backend system may simply count the transaction and may determine based on the number of transaction the expected part of the identifier.

In an alternative approach the mobile communication device may change the part of the identifier depending on the time of transaction. The sequence of parts of the identifier submitted to the reader device may be updated and stored in the secure element such that no permanent data connection between mobile communication device and backend system is needed.

The application running on the secure element may generate information about the part of the identifier transferred to the reader device. This information may be submitted by means of the mobile communication device to the backend system in order check and release the payment. The part of the identifier submitted to the reader device may in this case be determined by means of the application running on the secure element. This may enable a flexible security check in case there is a reliable connection available between mobile communication device and backend system.

In case that the verification of the transaction is not performed by means of request submitted to the backend system it may be particularly important to submit additional information about the transaction via the mobile communication device to the backend system. The mobile communication device may submit plausibility information comprising, for example, information regarding time, location, amount of money, goods or services which were bought by the user and the like to the backend system. Alternatively or in addition a mandate may be confirmed to the backend system to release the personal data as a form of a digital signature. The backend system may check the plausibility of the transaction in accordance with defined criteria. The transactions to be paid by means of the identifier may be limited to certain locations and/or goods and services stored in the backend system. The location may, for example, be limited to an area around residence of the user and may be adapted only by means of a request by the user or an authentication procedure initiated by the backend system. A maximum amount of money may be defined which can be paid by means of the mobile communication device within a certain time period. Certain goods may be excluded and/or the frequency of transactions in general or regarding certain goods and services may be used by means of the backend system in order to check the plausibility of the transaction. The backend system may, for example, determine that jewelry is bought at different places and/or within a certain time period. The backend system may be enabled to contact the user by means of a different or independent communication channel in this case in order to inform the user about the transactions. The backend system may be even enabled to block the payment functionality of the mobile communication device by means of a message sent to the mobile communication device. An application running, for example, on the secure element may stop further transactions after receiving such a message. There is a risk that reception of such a message may be blocked. The application running on the secure element of the mobile communication device may therefore be adapted to regularly receive an enabling message from the backend system. Further transactions may be blocked and the identifier may even be deleted if the enabling message is not received by means of the mobile communication device and forwarded to the secure element. The backend system may provide such enabling messages, for example, every hour. Alternatively the application running on the secure element may request the enabling message prior to each transaction exceeding a certain amount of money, a certain number of transactions or after each time a communication between the mobile communication device and the network enable data exchange with the backend system. The application running on the processor of the secure element may stop transactions if no communication between the mobile communication device and the network has been established within a defined period of time. The backend system may be enabled to contact the PSP or the bank system in order to avoid further transactions by means of the mobile communication device if evaluation of the plausibility information may indicate a misuse of the payment functionality of the mobile communication device.

The user of the mobile communication device may be automatically contacted after a transaction is blocked or further transactions are blocked. The backend system may request an independent authentication of the user of the mobile communication device. The authentication process may comprise individual information like a PIN, biometric data or the like in order to authenticate the user. The authentication process may be performed by means of the mobile communication device or by means of another communication device. The transaction or future transactions may be released after authentication of the backend system.

An application running on the mobile communication device may be enabled to authenticate the payment and the reader device may be enabled to authenticate itself. Mutual authentication of the mobile communication device or the application running on the secure element may provide a higher security of transaction by means of limiting transactions to authorized devices. Neither the mobile communication device nor the reader device may be able to perform a transaction if mutual authentication fails. In addition the user may be requested to confirm the transaction and/or transmission of the identifier by means of a PIN, biometric data or the like via the mobile communication device and/or via the reader device or an accordingly adapted device of the billing system being in communication with the reader device. The latter may increase transaction security especially in case of transmitting the complete identifier from the mobile communication device to the reader device.

The secure element may be enabled to encrypt the identifier or the part of the identifier to be transmitted to the reader device in order to increase the security of transactions. The bank system and/or the backend system may be able to decrypt the identifier. The backend system may confirm the correctness of the identifier after decryption such that the payment by means of the bank system may be released.

According to a further aspect of the present invention a mobile communication device is provided. The mobile communication device is adapted for direct debiting a user, the mobile communication device comprises:
a radio interface for receiving at least a part of an identifier provided by means of a backend system;
a secure element being adapted to store the transmitted identifier;
a processor for preparing a transaction to a reader device by means of at least a part of the transmitted identifier; and
a transaction interface for transferring at least a part of the transmitted identifier to a reader device for starting the transaction.

The secure element like a SIM or USIM may comprise an internal secure memory and secure processor. A main processor of the mobile communication device or the secure processor of the secure element may be used to prepare the transaction. It may be favorable to prepare the transaction only by means of an application running on the secure processor because this may enable a higher degree of security by means of using, for example, encryption performed by the secure processor. Alternatively, a part or the whole transaction may be performed by means of the main processor of the mobile communication device. The radio interface may use any kind of wireless communication technology suitable to receive the identifier. Wireless Local Area Networks, GSM, UMTS or LTE networks may be used to establish a connection to the backend system. The transaction interface may comprise any kind of technology enabling a secure connection between the mobile communication device and the reader device. Preferably, short range communication technologies as NFC or Bluetooth are used to transfer the identifier. The transaction interface may comprise in this case a NFC or Bluetooth module. The secure element may be integrated in such modules.

According to a further aspect of the present invention a system for direct debiting a user is provided. The system comprises a mobile communication device as described above and the backend system.

The backend system comprises a backend processor for generating the identifier. The backend system further comprises a backend memory for storing the identifier and a backend interface for transmitting at least a part of the identifier to the mobile communication device. The backend interface is further adapted to receive a request of confirmation comprising at least the part of the identifier transferred to the reader device. The backend processor is further adapted to authenticate the request and to prepare a confirmation to verify the identifier transferred to the reader device. The backend interface is further adapted to transfer the confirmation for initiating a payment by means of a bank system.

The backend interface may be configured to directly receive the request by means of wireless communication technology as discussed above or via a transmission service system. The transmission service system and the backend system may exchange data via a wired connection and the transmission service system may provide the wireless connection to the mobile communication system. The backend processor may be a single processor or a multitude of processors with distributed functionalities. The backend processor may be enabled to encrypt the identifier and decrypt an encrypted identifier by means of, for example, symmetric or asymmetric encryption or decryption methods.

In another aspect of the present invention a computer program product stored on a computer-readable medium or downloaded from a network is presented, the computer program product comprises code means for producing the steps of method as claimed in any of claims 1 - 13 when run on the mobile communication device.

It shall be understood that the method of claim 1, the mobile communication device of claim 14 and the system of claim 15 have similar and/or identical embodiments, in particular, as defined in the dependent claims.

It shall be understood that a preferred embodiment of the invention can also be any combination of the dependent claims with the respective independent claim.

Further advantageous embodiments are defined below.

### Brief description of the drawings:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a system for direct debiting a user.
Fig. 2 shows an alternative system for direct debiting a user.
Fig. 3 shows a system for direct debiting a user including a feedback loop.
Fig. 4 shows a mobile communication device including a secure element.
Fig. 5 shows an example of a backend system.
Fig. 6 shows a flow diagram of a method of direct debiting a user.
Fig. 7 shows a flow diagram of an alternative method of direct debiting a user.

In the Figures, like numbers refer to like objects throughout. Objects in the Figures are not necessarily drawn to scale.

### Detailed description of embodiments:

Various embodiments of the invention will now be described by means of the Figures.

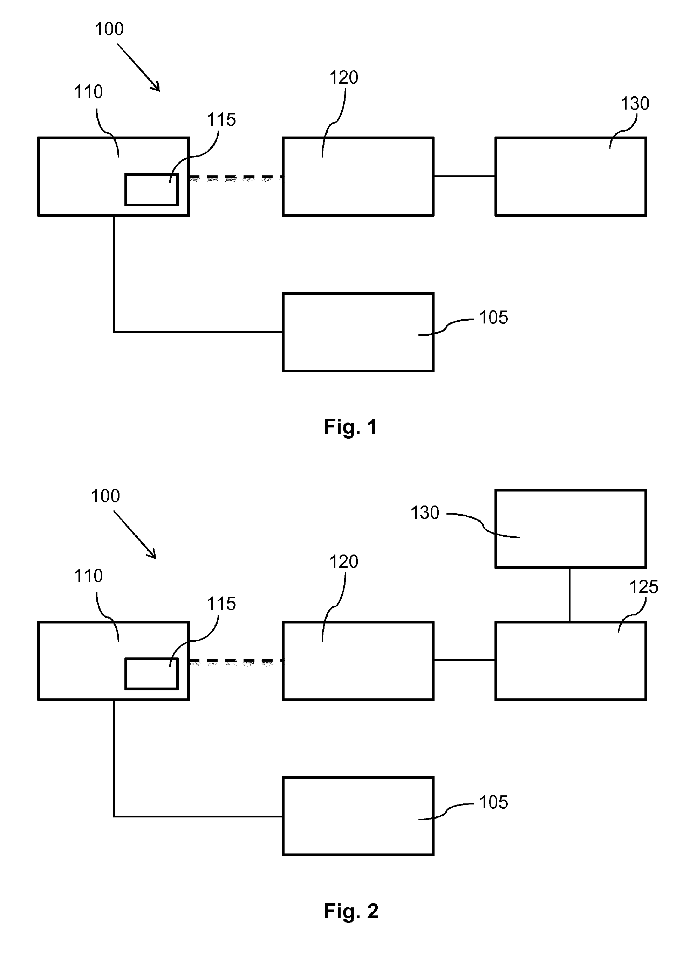

Fig. 1 shows a system 100 for direct debiting a user. The system comprises a backend system 105 and a mobile communication system 110 with a secure element 115. The backend system is coupled by means of suitable wireless communication technology as GSM, UMTS, LTE or the like to the mobile communication device. The backend system 105 generates or gets from another facility like a bank an identifier comprising customer name and address in addition to the bank information as International Bank Account Number (IBAN) and Bank Identifier Code (BIC). The identifier may be generated after an request of the customer or user. The request may be confirmed by a bank system 130. The complete identifier is transferred to the mobile communication device 110 and securely stored in the secure element 115. The secure element 115 provides an encryption of the identifier such that authorized devices or people can decrypt the identifier. The user of the mobile communication device 110 initiates a transaction at a PoS by means of coupling the mobile communication device 110 to a reader device 120 being part of a billing system of the PoS. The coupling happens by means of NFC technology and includes mutual authentication of the mobile communication device 110 and reader device 120. After authentication and verification by means of PIN provided via an input unit of the mobile communication device 110 transaction data comprising the encrypted identifier is transferred to reader device 120. The transaction data may comprise the price to be paid and further data (time, location etc.) which may be relevant for the transaction. All transaction data may be encrypted in order to avoid manipulation of the transaction data. The reader device 120 transfers the transaction data to the bank system 130. The bank system 130 checks the transaction by decrypting the transaction data and release the payment by debiting the account of the user identified by the identifier.

In Fig. 2 a Payment Service Provider (PSP) 125 may provide the reader device 120 in order to support the merchant. The PSP 125 further organizes secure data transmission to the bank system 130. Furthermore, plausibility information is sent from the mobile communication device 110 to the backend system 105. The plausibility information comprises time and location of transaction, amount of money to be paid and goods or services which were bought by the user. The backend system 105 checks by means of the plausibility information whether the transactions to be paid by means of the identifier is initiated within an area around residence of the user defined by the user. The backend system 105 further checks whether a maximum amount of money within a certain time period is exceeded. The backend system 105 checks in addition whether forbidden goods or services are bought. The backend system 105 can block the transaction by sending a message to the mobile communication device 110. The backend system 105 further provides enabling messages to the mobile communication system 110 every five minutes. The secure element 115 blocks further transactions in case no enabling message is received within the time period of five minutes until a new enabling message is sent by means of the backend system 105 and received by the mobile communication device. The enabling messages are encrypted with a symmetric or asymmetric key.

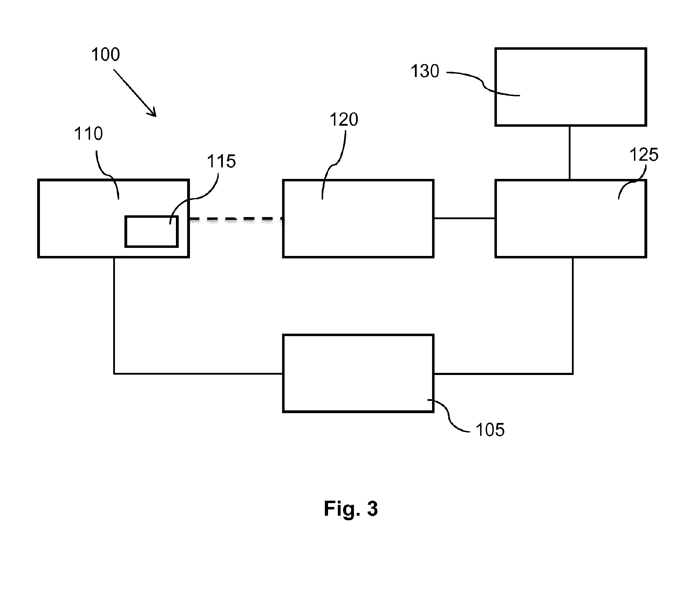

Fig. 3 shows a system for direct debiting a user including a feedback loop between the PSP 125 and the backend system 105. The backend system 105 transfers only a part of the identifier to the mobile communication system 110. The part of the identifier is encrypted and stored in the secure element 115. An application running on the secure element 115 transfers during a transaction initiated by the user of the mobile communication device 110 again only a part of the identifier received from the backend system to the reader device 120. The part of the identifier is encrypted and the part of the identifier is submitted to reader device 120 in accordance with a schedule defined by the backend system 105. The reader device 120 adds first information to the transaction data such that the reader device, time and location of transaction can be identified by means of the first information. The reader device 120 forwards the transaction data including the part of the identifier and the first information to the PSP 125. The PSP 125 requests a verification of the transaction data by means of the backend system 105 by submitting the transaction data to the backend system 105. The backend system 105 decrypts the transaction data and checks whether the part of the identifier is correct and submitted in accordance with defined schedule. The backend system 105 further checks whether the reader device 120 is authorized for the transaction (trusted reader device) and compares the time and location added to the transaction data by means of the reader device with second information received from the mobile communication device 110. The full identifier is encrypted if the transaction passes all tests and submitted via PSP 125 to the bank system 130. The bank system 130 decrypts the identifier and debits the account of the user provided that the account shows sufficient credit. The bank system 130 releases the payment only if the account of the user shows sufficient credit.

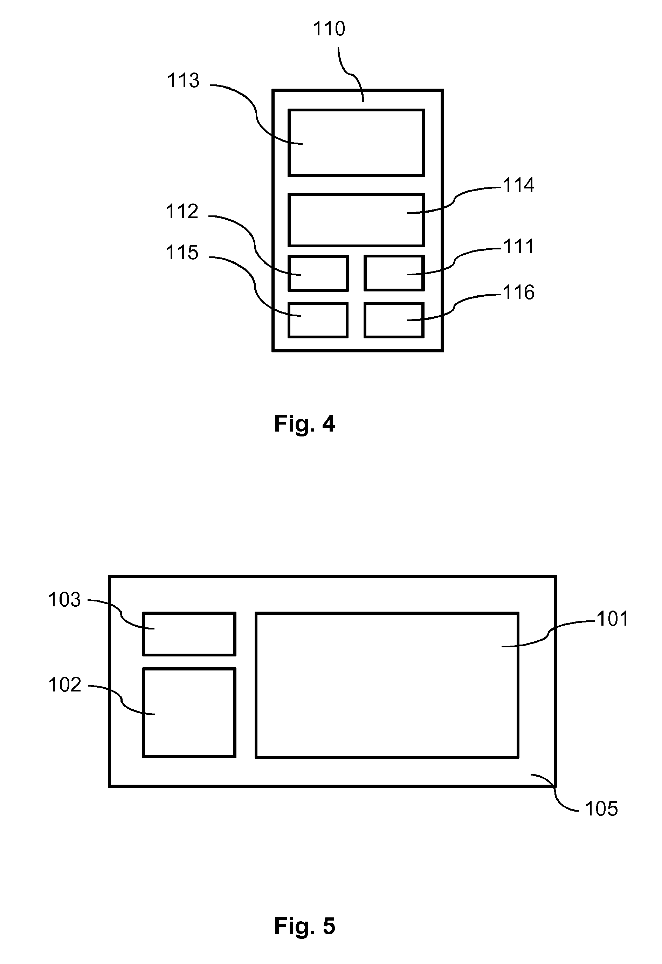

Figure 4 shows a schematic block diagram of the mobile communication device 110. The mobile communication device 100 comprises a main processor 111 for controlling the operation of the mobile communication device 110. A memory unit 112 is coupled to the main processor 111 for storing data and applications that can be run on the main processor 111. Furthermore, the mobile communication device 110 comprises one or more communication interfaces. Particularly, the mobile communication device 110 provides a radio interface 112 for connecting the mobile communication device 110 wirelessly to a mobile communication network.

The mobile communication device 110 comprises a display unit 113 and an input unit 114, which can be operated by the user of the mobile communication device 110. The input unit 114 may be configured as a keypad or touchscreen.

The mobile communication device 110 further comprises a secure element 115. The secure element 115 may be configured as a subscriber identity module (SIM) according to the GSM standard or as a universal subscriber identity module (USIM) according to the UMTS standard, for example. It comprises a microprocessor (secure processor) and a non-volatile memory (secure memory) and stores preconfigured user-related and network-related data, particularly data identifying the mobile user and data for authenticating the user or his mobile communication device 110 to the mobile network. Moreover, it may store personal data of the mobile user, such as for example, contact data, notes or messages received in the mobile communication device 110.

The mobile communication device 110 further comprises a short range communication module 116. One example of an interface for short range communication module 116 is a Near Field Communication (NFC) module, which allows a communication with an NFC enabled terminal. The NFC technology is specified in ISO 18092 and 21481, ECMA 340.352 and 356, and ETSI TS 102 109 and allows contactless communication between devices over a short distance of about 10 to 30 centimeters. Near field devices comprise an NFC controller with a micro processor and memory and a magnetic loop antenna operating at a frequency of 13.56 MHz. The NFC controller controls the antenna on a physical level. On an application level, the execution of transactions is controlled by NFC applications, which are executed in the secure element 115 connected to the NFC controller. Since the execution of transactions, such as financial transactions, usually involves sensitive data, the secure element 115 provides a security architecture preventing unauthorized third parties from accessing the sensitive data.

Fig. 5 shows a backend system 105 comprising a backend memory 101, a backend processor 102 and a backend interface 103. The backend processor 102 is adapted by means of a dedicated software code stored in the backend memory 101 to generate an identifier. The identifier is generated in reaction to a request of a user. The user has to provide data for identification and evidence of an account in a bank. The identifier may alternatively be requested by the PSP 125 or the bank system 130 if the user agrees to such a request. The backend system further comprises a backend interface 103 enabling the backend system 105 to communicate with the mobile communication device 110, the reader device 120, the PSP 125 and/or the bank system 130 by means of wireless or wired communication technology. The request for verifying a transaction is received by means of the backend interface 103 and subsequently checked by means of the backend processor 102 and the identifier stored in the backend memory 101.

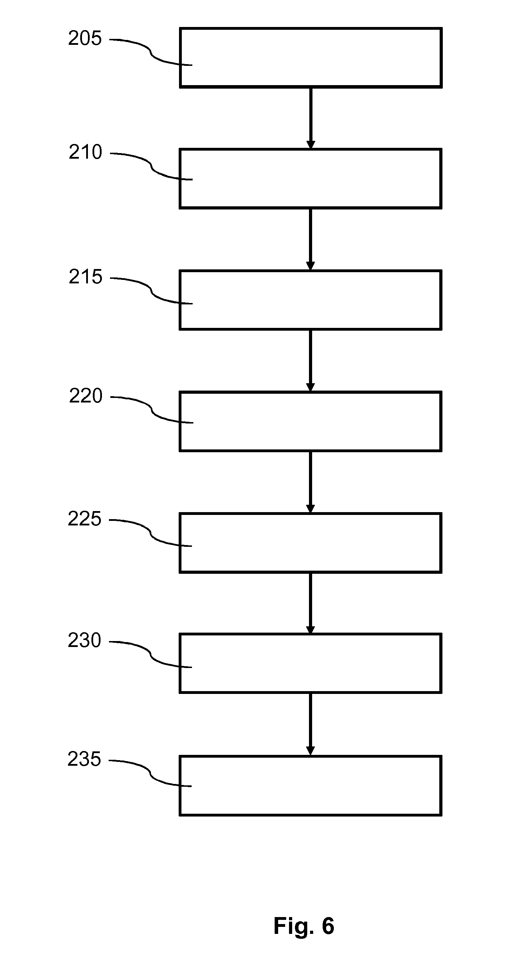

Fig. 6 shows a flow diagram of a method of direct debiting a user.

In step 205 an identifier is received by means of the mobile communication device 110. The identifier is securely stored in the secure element 115 of the mobile communication device in step 210. In step 215 a data connection between the mobile communication device 110 and/or the secure element 115 and a reader device 120 is initiated for preparing a transaction. The identifier is verified in step 220 by means of a PIN provided by the user of the mobile communication device 110. In step 225 a part of the identifier is transferred to the reader device 120 and transmitted to the bank system 130 in step 230. The bank system 230 initiates the payment in step 235 after encrypting the identifier.

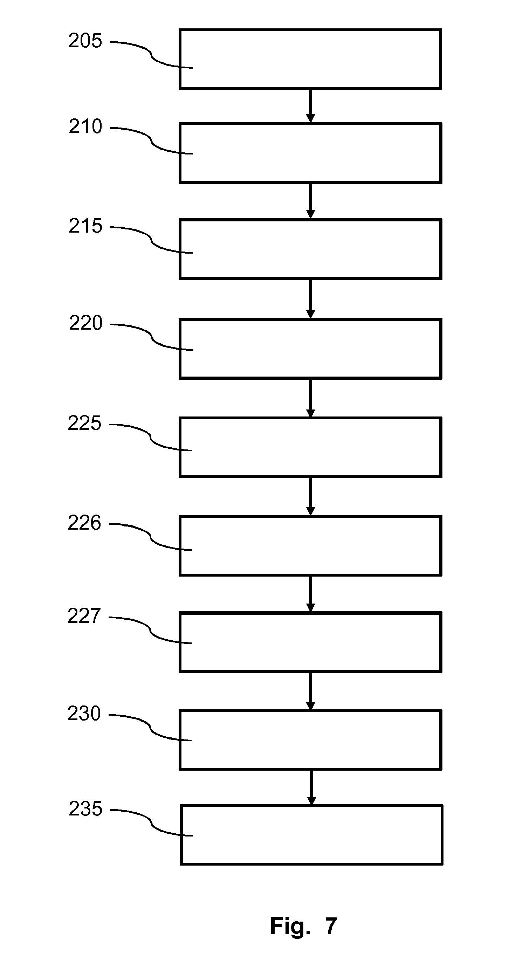

Fig. 7 shows an alternative method of direct debiting the user. In step 205 a part of the identifier is received by means of the mobile communication device 110. The part of the identifier is securely stored in the secure element 115 of the mobile communication device in step 210. In step 215 a data connection between the mobile communication device 110 and/or the secure element 115 and the reader device 120 is initiated for preparing a transaction. A part of the stored identifier is transferred to the reader device in step 225. The reader device requests a verification of the part of the identifier from the backend system 130 in step 226. The backend system 130 verifies the part of the identifier in step 227 and transmits the encrypted complete identifier to the bank system 130 in step 230. The bank system 230 initiates the payment in step 235 after encrypting the identifier.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

### List of reference numerals:

- 100: system
- 101: backend memory
- 102: backend processor
- 103: backend interface
- 105: backend system
- 110: mobile communication device
- 111: main processor
- 112: radio interface
- 113: display
- 114: input unit
- 115: secure element
- 116: short range communication module
- 120: reader device
- 125: payment service provider
- 130: bank system
- 205: step of receiving the identifier or a part of the identifier
- 210: step of storing the identifier
- 215: step of initiating a data connection between the mobile communication device and/or the secure element and the reader device
- 220: step of verifying identifier by means of user
- 225: step of transferring at least a part of the transmitted identifier to the reader device
- 226: step of requesting verification of identifier
- 227: step of verifying identifier by means of backend system
- 230: step of transmitting the identifier to the bank system
- 235: step of initiating a payment

## Claims

1. A method of direct debiting a user by means of a mobile communication device (110) comprising a secure element (115), the method comprising the steps of:
- receiving at least a part of an identifier provided by means of a backend system (105) by means of the mobile communication device (110);
- storing the transmitted identifier in the secure element (115);
- initiating a data connection between the mobile communication device (110) and/or the secure element (115) and a reader device (120) for preparing a transaction;
- transferring at least a part of the transmitted identifier to the reader device (120);
- verifying the identifier to be transferred to the reader device (120) or transferred to the reader device (120) in order to release a payment by means of a bank system (130).

2. The method according to claim 1, wherein a part of the identifier is received by the mobile communication device (110) and the step of verifying comprises the steps of:
- receiving a request for confirming the transaction and/or the payment by means of the backend system (105) by providing at least the part of the identifier transferred to the reader device (120);
- authenticating the request by means of the backend system (105); and
- transferring the confirmation from the backend system (105) to the bank system (130) of the user.

3. The method according to claim 2, wherein the request comprises first information about the transaction and the method comprises the steps of:
- submitting second information about the transaction from the mobile communication device (110) to the backend system (105); and
- comparing the first and second information about the transaction by means of the backend system (105).

4. The method according to claim 2 or 3, wherein the request comprises a one-time authentication information.

5. The method according to claim 4, wherein the one-time authentication information is the part of the transmitted identifier transferred to the reader device (120).

6. The method according to claim 5, wherein the part of the transmitted identifier transferred to the reader device (120) is transferred in accordance to a sequence defined by the backend system (105).

7. The method according to claim 5, wherein the method comprises the step of:
- submitting information about the part of the transmitted identifier transferred to the reader device (120) from the mobile communication device (110) to the backend system (105).

8. The method according claim 1, wherein the method comprises the steps of:
- submitting plausibility information about the transaction to the backend system (105) by means of the mobile communication device (110);
- checking the plausibility information by means of the backend system (105); and
- stopping the transaction and/or payment depending on the result of the check.

9. The method according to claim 8, wherein the method comprises the further steps of;
- contacting the user after stopping the transaction and/or payment;
- requesting authentication of the user; and
- releasing the transaction and/or payment after authentication by means of the user.

10. The method according to claim 1 or 8, wherein the complete identifier is transmitted to the mobile communication device (110) and the step of verifying comprises the steps of:
- sending authentication information from the mobile communication device (110) to the reader device (120); and
- receiving authentication information from the reader device (120) by means of the mobile communication device (110).

11. The method according to any of the preceding claims, wherein the method comprises the step of:
- requesting a confirmation of the user prior to transferring at least a part of the identifier received by the mobile communication device (110) to the reader device (120).

12. The method according to any of the preceding claims, wherein the method comprises the step of:
- encrypting the transmitted identifier by means of the secure element (115).

13. The method according to claim 12, wherein the method comprises the step of:
- confirming the correctness of the identifier or the correctness of the part of the identifier by means of the backend system (105).

14. A mobile communication device (110) being adapted for direct debiting a user, the mobile communication device (110) comprising:
a radio interface (112) for receiving at least a part of an identifier provided by means of a backend system (105);
a secure element (115) being adapted to store the transmitted identifier;
a processor for preparing a transaction to a reader device (120) by means of at least a part of the transmitted identifier; and
a transaction interface (116) for transferring at least a part of the transmitted identifier to a reader device (120) for starting the transaction.

15. A system comprising a mobile communication device (110) according to claim 14 and the backend system (105), wherein
the backend system comprises a backend processor (102) for generating the identifier, the backend system further comprises a backend memory (101) for storing the identifier and a backend interface (103) for transmitting at least a part of the identifier to the mobile communication device (110);
the backend interface (103) being further adapted to receive a request of confirmation comprising at least the part of the identifier transferred to the reader device (120);
the backend processor (102) being further adapted to authenticate the request and to prepare a confirmation to verify the identifier transferred to the reader device (120); and
the backend interface (103) being further adapted to transfer the confirmation for initiating a payment by means of a bank system (130).
